# EUROPEAN PATENT APPLICATION

(11) **EP 4 804 368 A1**
(43) Date of publication of application: **09.09.2026**
(21) Application number: 26163067.7
(22) Date of filing: 06.03.2026
(51) Int. Cl.: H02J 3/38, H02J 3/46, H02J 3/388, H02J 3/42, H02J 3/466, H02J 9/06

(54) **UNIVERSAL DEAD BUS ARBITRATION FOR DISTRIBUTED ENERGY RESOURCES**

(30) Priority: 07.03.2025 US 202519073376
(71) Applicant: Google LLC, Mountain View, CA 94043 (US)
(72) Inventor: Upreti, Ashish, Mountain View, California 94043 (US); Ravikumar, Krishnanjan Gubba, Mountain View, California 94043 (US)
(74) Representative: Betten & Resch

(57) **Abstract**

Generally disclosed herein is a dead bus arbitration mechanism using a two-stage process. Individual distributed energy resource (DER) protection systems may be configured to enable a fast energization of the dead bus by initiating requests among the multiple power generation assets via a common bus architecture. The system may determine the first power asset that reaches predefined criteria or threshold values and grant permission to connect to the load bus for energization. After a predetermined interval, the system may be configured to output a secondary signal to initiate breaker closure. The original power asset that originated the initial request for dead bus closure may receive the secondary output signal.

## Description

A dead bus arbitration is a safety function that prevents multiple distributed energy resources (DERs) from simultaneously connecting to a dead bus. The dead bus may refer to a bus that has no current or voltage from any source to power the load that is connected. Dead bus arbitration is used to avoid faulty synchronization, which can occur when two or more DERs attempt to energize the dead bus simultaneously in a fast start application. Only one DER is allowed to energize the dead bus, and all other DERs are prevented from energizing the dead bus. Typically, the dead bus arbitration relies on proprietary communication protocols limited to a particular vendor or asset type. Often, it limits the flexibility to combine DERs from different vendors. This process may involve a permissive signal circulated among generators that meet the specific requirements of frequency and voltage to energize a distributed energy resource parallel bus (DERPB) that connects multiple generators to operate as one. Typically, the DERPB is limited to vendor-specific applications and lacks interoperability.

### SUMMARY

Generally disclosed herein is a dead bus arbitration mechanism using a two-stage process. A dead bus arbitration system or individual distributed energy resource (DER) protection systems may be configured to enable a fast energization of the dead bus by initiating requests among the multiple power generation assets via a common bus architecture. The system may determine the first power asset that reaches predefined criteria or threshold values and grants permission to connect to the load bus for energization. After a predetermined interval, the system may be configured to output a secondary signal to initiate breaker closure. The original power asset that originated the initial request for dead bus closure may receive the secondary input signal and may issue a close output signal.

An aspect of the disclosure provides a dead bus arbitration system for a server system. The dead bus arbitration system may comprise memory; and one or more processors configured to detect a dead bus without a current or a voltage, monitor a voltage level and a frequency level of a plurality of generators available in the server system, determine whether two or more generators of the plurality of generators achieve a predefined threshold voltage level and frequency level, receive respective first request signals from the determined two or more generators, wherein each first request signal requests a connection to the detected dead bus, select one generator from the determined two or more generators based on assigned timer values, control the selected generator to transmit a second request signal, close a breaker connected to the selected generator, and transmit power from the selected generator to the detected dead bus.

In some examples, the plurality of generators may be distributed energy resources.

In some examples, the distributed energy resources may comprise one or more of solar photovoltaic generating units, wind generating units, or battery storage.

In some examples, the dead bus may be a distributed energy resources paralleling bus.

In some examples, the one or more processors may be configured to randomly assign the timer values to each of the plurality of generators.

In some examples, the one or more processors may be configured to use a machine learning model trained with data related to each generator's times taken to reach the predefined threshold voltage level and frequency level and assign the timer values to each of the plurality of generators using the trained machine learning model.

In some examples, the one or more processors may be configured to select one generator from the determined two or more generators when the generator reaches the predefined threshold voltage level and frequency level faster than remaining generators.

In some examples, the plurality of generators may be configured to communicate wirelessly with one another.

In some examples, one or more generators that were not authorized to transmit the second request signal may be connected to energize a different bus.

In some examples, the one or more generators that were not authorized to transmit the output signal may be connected to a generator parallel switch (GPS) bus.

Another aspect of the disclosure provides a method for arbitrating a dead bus for a server system. The method may comprise detecting, by one or more processors, a dead bus without a current or a voltage, monitoring, by the one or more processors, a voltage level and a frequency level of a plurality of generators available in the server system, determining, by the one or more processors, whether two or more generators of the plurality of generators achieve a predefined threshold voltage level and frequency level, receiving, by the one or more processors, respective first request signals from the determined two or more generators, wherein each first request signal requests a connection to the detected dead bus, selecting, by the one or more processors, one generator from the determined two or more generators based on assigned timer values, controlling, by the one or more processors, the selected generator to transmit a second request, closing, by the one or more processors, a breaker connected to the selected generator, and transmitting, by the one or more processors, power from the selected generators to the detected dead bus.

In some examples, the plurality of generators may be distributed energy resources.

In some examples, the distributed energy resources may comprise one or more of solar photovoltaic generating units, wind generating units, or battery storage.

In some examples, the dead bus may be a distributed energy resources paralleling bus.

In some examples, the method may comprise randomly assigning, by the one or more processors, the timer values to each of the plurality of generators.

In some examples, the method may comprise using a machine learning model trained with data related to each generator's times taken to reach the predefined threshold voltage level and frequency level and assigning the timer values to each of the plurality of generators using the trained machine learning model.

In some examples, the method may comprise selecting, by the one or more processors, one generator from the determined two or more generators when the generator reaches the predefined threshold voltage level and frequency level faster than remaining generators.

In some examples, the method may comprise connecting the plurality of generators wirelessly for communication.

In some examples, the method may comprise connecting one or more generators that were not authorized to transmit the second request signal to energize a different bus.

In some examples, the method may comprise connecting the one or more generators that were not authorized to transmit the output signal to a generator parallel switch (GPS) bus.

### BRIEF DESCRIPTION OF THE DRAWINGS

FIG. 1 is an example architecture of a dead bus arbitration system in accordance with aspects of the disclosure.
FIG. 2 is an example intelligent electronic device (IED) communicable with distributed energy resources (DERs) in accordance with aspects of the disclosure.
FIGS. 3A-D are example block diagrams illustrating the dead bus arbitration process in accordance with aspects of the disclosure.
FIG. 4 is an example dead bus arbitration system in accordance with aspects of the disclosure.
FIG. 5 is an example flow diagram of the dead bus arbitration system in accordance with aspects of the disclosure.

### DETAILED DESCRIPTION

The present disclosure relates to a method and system for providing universal applicability to any generator or distributed energy resource (DER) to facilitate the seamless integration and interoperability of diverse DERs. Therefore, the present disclosure provides for increased inter-generator communication because such communication does not depend on proprietary inter-generator set communication protocols or tokens. When the system detects a dead bus, the system receives intermediate closure requests from the DERs. The first DER that achieves the predefined voltage and current may transmit the first output. The system may be configured to await a predetermined time for the DER based on the timer value assigned to each DER asset. The system may be configured to assign varying timer values to each DER. When more than one generator attempts to connect to the dead bus, the DER with the lowest timer value will transmit the second output. The second output may be a final breaker closure signal. The system may receive the second output and connect the generator to the dead bus.

According to some examples, the timer value may be randomly assigned by the system. According to other examples, the system may be configured to utilize a machine learning model to decide each timer value for each DER. The machine learning model can be trained using data from previous DER startup and synchronization data. The machine learning models can assign the smallest timer value for the fastest DER that achieves predefined voltage and frequency.

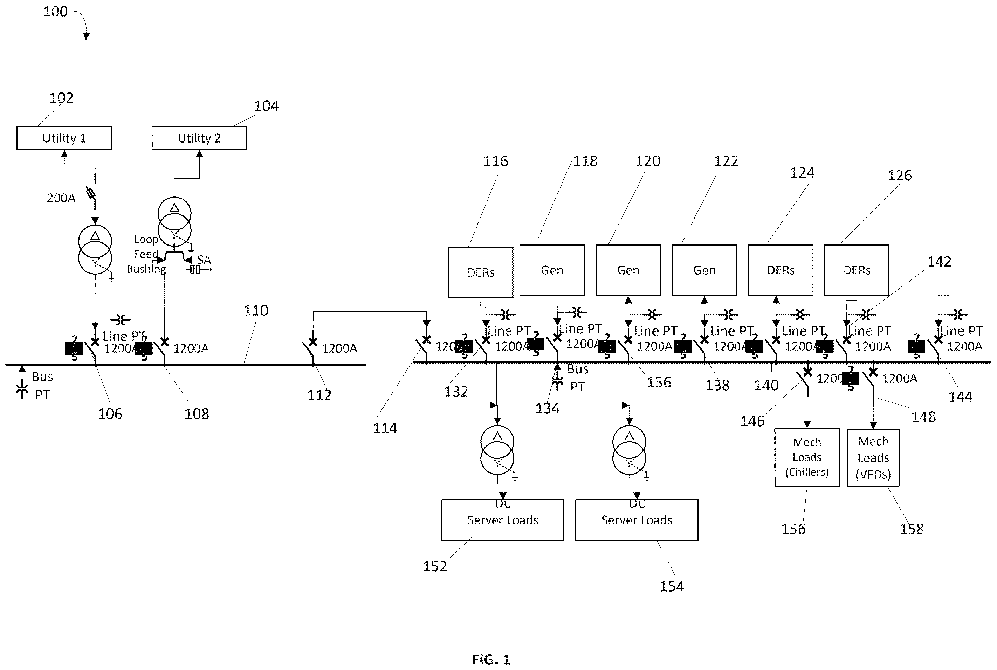

FIG. 1 illustrates an example architecture of a dead bus arbitration system 100 ("system"). The system may be configured to individually protect each DER by controlling which DER is selected to energize the dead bus and which DERs should not energize the dead bus based on a timer value assigned to each DER. The system may be configured to use an intelligent electronic device (IED) (not shown) to monitor the voltages and frequencies of the DERs and determine whether any of the DERs reach predefined voltage or frequency values.

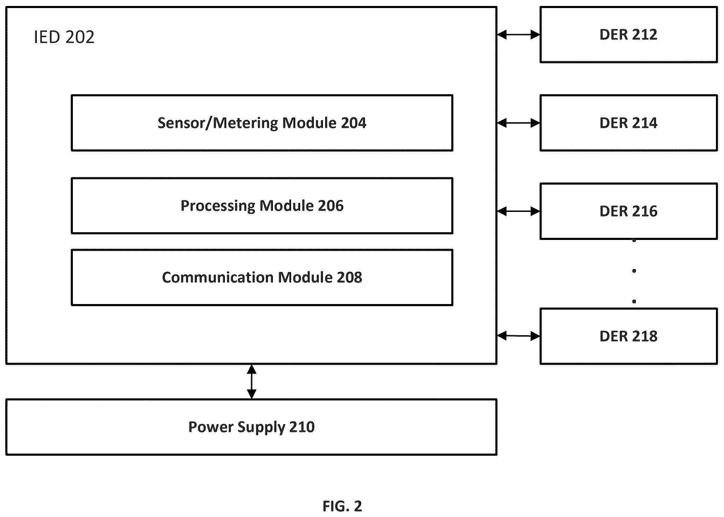

The dead bus arbitration system 100 may include utility 102, utility 104, DERs 116, 124, 126, and generators 118, and 120, 122. Each DER and generator may be connected to the IED and the IED may be configured to control and monitor each DER and generator as described in more detail in connection with FIG. 2 below. DERs and generators are connected to a distributed energy resource parallel bus (DERPB) 110. DERPB 110 receives power from utilities 102 and 104 and provides power to server loads 152, 154, and mechanical loads 156 and 158. Each DER and generator are connected to circuit breakers 106, 108, 112, 14, 134, 136, 138, 140, 144, 146 and 148. Each circuit breaker is connected to DERPB 110. When each circuit breaker closes, the corresponding DER or generator can transmit power to DERPB 110. When the circuit breaker is open, no power can be transmitted from the DER or the generator.

Utility may refer to an electric utility or a power company that can generate and distribute electricity. DERs may refer to small-scale energy generation or storage systems that can be connected to an electric grid or operate independently. DERs may include solar photovoltaic generating units, wind generating units, battery storage, wind turbines, fuel cells, microturbines, etc. Generators may refer to machines that can convert mechanical energy into electrical energy. Generators may include diesel or natural gas generators, gas turbines, engine-generators, etc.

DERPB may refer to a bus where multiple DERs can be connected and feed power directly into the grid, operating in parallel with utilities. When both utilities 102 and 104 fail to supply power to DERPB 110, the circuit breakers 106 and 108 may be configured to open, disconnecting utilities 102,104 from DERPB 110. If DERPB 110 does not receive power from utilities 102 -104, the power cannot be transmitted to server loads 152 -154, mechanical loads 156, 158. In some examples, if the system detects that utilities 102-104 do not transmit power to DERPB 110, the system may cause circuit breakers 112-114 to open, resulting in the same effect as above. The circuit breakers 112-114 may be configured to open when there is an electrical problem with DERPB 110 itself even though the power is transmitted from utilities 102-104 with no trouble.

When the IED detects openings of the circuit breakers 106-108, or circuit breakers 112-114, the IED may be configured to monitor the voltages and frequencies of the DERs 116, 124, 126 and generators 118, 120, 122. For example, the IED may monitor the voltage and frequency of each DER and generator. In other examples, the IED may monitor a subset of the DERs and/or generators. Based on the monitoring, the IED may determine whether one or more of the DERs and/or generators should close their respective circuit breaker. For example, such determination may be based on detecting that the voltage or frequency of the DER or generator reached a preconfigured value. Accordingly, the IED may control one of the DER or generators which reaches preconfigured voltage and frequency values to close the corresponding circuit breaker. For example, if the IED controls DER 116 to close the circuit breaker 132, the power stored in DER 116 may be transmitted to DERPB 110 again and server loads 152-154 and mechanical loads 156-158 may receive the power from DER 116. In some examples, if more than one DER or generator reaches the preconfigured voltage and frequency values simultaneously or almost simultaneously, the IED may determine which circuit breaker should be closed. For example, the IED may determine which DER or generator should take priority, or which corresponding circuit breaker should take priority. Priority may be determined based on timer values. The timer values can be randomly assigned or associated with the time each DER takes to reach the predefined voltage and frequency values.

In some examples, determining which DER or generator should take priority may be performed in response to receiving circuit breaker closing signals from the DERs or generators The prioritized DER or generator is allowed to transmit power to various loads such as server loads 152, 154, mechanical loads 156 and 158.

In some examples, the timer value may be pre-assigned to each DER or generator based on historical data. For example, if DER 116 reached the preconfigured voltage and frequency values in previous occasions of power outage, the IED may be configured to store historical information about DER 116's average voltages and frequency values and how fast the DER 116 reached the preconfigured voltage and frequency values. in the storage. In some examples, the system may be configured to utilize a machine learning model trained with various information about start-up time, voltage and frequency levels, and type of underlying energy (e, g, solar, wind, gas, etc.) to determine which DERs or generators are assigned to lower timer values than others. For example, when two DERs attempt to close the corresponding circuit breakers almost simultaneously, the IED may be configured to allow the DER with a lower r timer value to close the circuit breaker.

FIG. 2 is a block diagram illustrating an example intelligent electronic device (IED) communicable with distributed energy resources (DERs). The IED can take on a variety of configurations, such as, for example, a controller or microcontroller, or a processor, such as a CPU, a GPU, or an ASIC, including a tensor processing unit (TPU). IED 202 may be configured to monitor the voltages and frequencies of DERs 212-218 and control one of the DERs that reaches preconfigured voltage and frequency values to close a corresponding circuit breaker and transmit the power to the loads. IED 202 may include known components such as a processor, memory including data, and instructions to execute various modules. IED 202 may include other components typically present in server computing devices. IED 202 may be configured to determine timer values for each connected DER and set a priority in case one or more DERs attempt to close the corresponding circuit breakers to transmit power to a dead bus. IED 202 may be configured to detect whether the power supply 210 is transmitting power to DERs 212-218 without error.

IED 202 may include sensor/metering module 204, processing module 206, and communication module 208. Sensor/metering module 204 may be configured to monitor the power voltage and frequency level of each DER 212-218 using telemetry. Since each DER uses a different mechanism or underlying energy source to store power in itself, each DER may have a different voltage and frequency level at a given moment. IED 202 may be configured to continuously monitor the changes in voltage and frequency values of DERs 212-218.

Processing module 206 may be configured to determine whether any of DERs 212-218 reaches a preconfigured voltage and frequency level to be able to transmit power to a dead bus. The preconfigured voltage and frequency levels may be determined based on the specification or capacity of the bus. Processing module 206 may be configured to determine that only one DER reaches the preconfigured voltage and frequency level, or two or more DERs reach the preconfigured values simultaneously or almost simultaneously. If there are more than one DER that reaches the preconfigured voltage and frequency values, processing module 206 compares the timer value assigned to each DER. The DER with the lower timer value may be selected to transmit the circuit breaker closing signal. Processing module 206 may be configured to synchronize the DERs that reached the preconfigured voltage and frequency level to synchronize to the dead bus while the corresponding circuit breakers remain open. In some examples, one or more generators that were not selected to transmit the second signals are connected to energize a different bus

When processing module 206 selects a DER to transmit the circuit breaker closing signal, communication module 208 may be configured to communicate with the selected DER and the corresponding circuit breaker to transmit the above signal to the corresponding circuit breaker. Once the corresponding circuit breaker receives the above signal, the power stored in the DER may be transmitted to the load. Communication module 208 may also be configured to communicate with the other DERs and corresponding circuit breakers to remain open.

It is to be appreciated that in this example, sensor/metering module 204, processing module 206, and communication module 208 are shown as part of IED 202. In other examples, IED 202, sensor/metering module 204, processing module 206, and communication module 208 may be implemented in one or more other systems or computing devices.

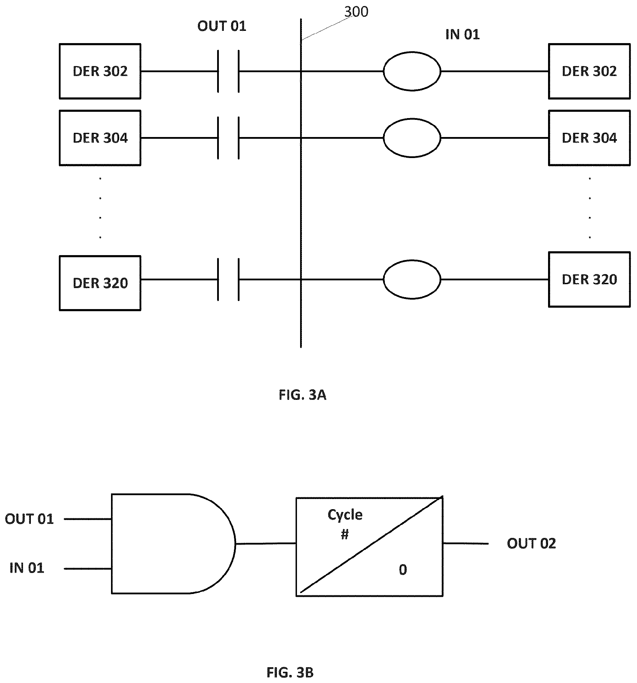

FIGS. 3A-D illustrate example block diagrams illustrating the dead bus arbitration process. FIG. 3A illustrates how an IED receives signals from hardwired DERs. Each DER 302-320 upon reaching the preconfigured voltage and frequency levels, may be configured to output signal "OUT 01" to common bus 300 and trigger the IED to output "IN 01" for all DERs 302-320 via common bus 300. It is to be understood that although only three (3) DERs are depicted in FIG.3A, there can be N number of DERs connected to IDE and send "OUT 01" signals.

In FIG. 3B, the IED may be configured to receive both signals "OUT 01" and "IN 01" to start a timer to prevent two or more DERs from energizing the dead bus simultaneously or almost simultaneously. The timer may be configured to identify the timer values assigned to each DER 302-320 and wait for the time corresponding to the timer values until issuing the "OUT 02" signal. For example, if DER 302 has the smallest timer value, "2 seconds", and DER 304 has a larger timer value "5 seconds" and both DER 302 and 304 reach the preconfigured voltage and frequency levels almost simultaneously and output "OUT 01" signals, the IED may wait 2 seconds until the IED issues "OUT 02" signal.

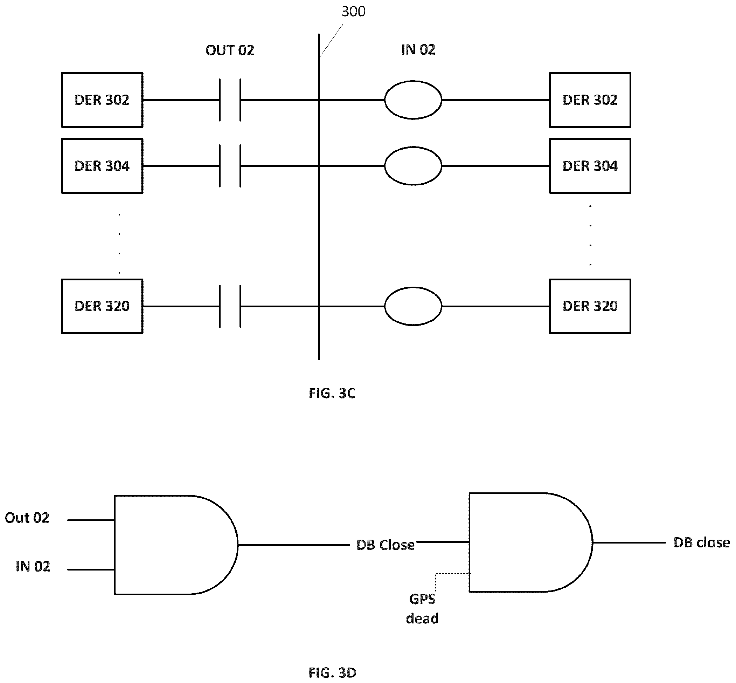

In FIG. 3C, the IED may be configured to output the "IN 02" signal for all DERs via common bus 300. In FIG. 3D, the IED may receive both "OUT 02" and "IN 02" signals via common bus 300 and determine which circuit breaker to close. For example, if DER 302 is the DER that triggered both "OUT 02" and "IN 02" signals, the IED may be configured to send a closing signal to the circuit breaker connected to DER 302, thereby allowing DER 302 to transmit power to the dead bus.

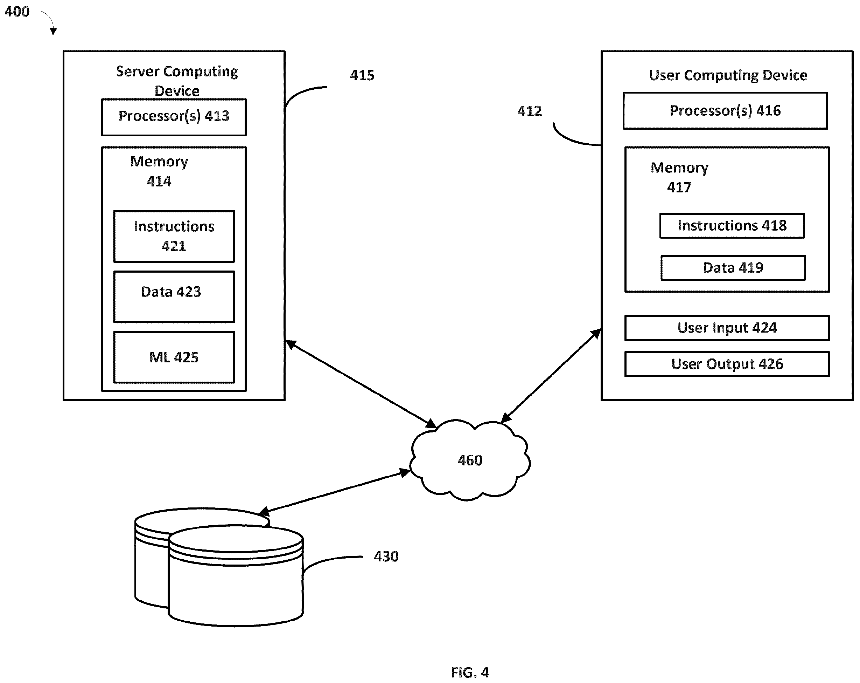

FIG. 4 depicts a block diagram illustrating example components of a power utilization forecasting system. User computing device 412 may include a graphical user interface and software that displays how the dead bus is being arbitrated or which DERs are activated to close the circuit breaker. The user may use the above information to update the configuration of the DERs connected to the IED. For example, the user may use the software actuators to change the power storage setting, start-up time, timer values of DER, etc. Server computing device 415 may be a component of IED 202 illustrated in FIG.2 Server computing device 415 may be configured to monitor the power voltage and frequency level of each DER. Server computing device 415 may be configured to determine whether any of the DERs reaches a preconfigured voltage and frequency level to be allowed to transmit power to a dead bus. If more than one DER reaches the preconfigured voltage and frequency values, server computing device 415 may be configured to determine the timer value assigned to the DERs. If any DER only reaches the preconfigured frequency or only reaches the preconfigured voltage, DER will wait to meet both conditions to request connection to energize the bus. IED 202 may determine if any other DER is requesting to connect to the dead bus that meets both conditions. DERs will only request to connect to the dead bus if both conditions are true.

User computing device 412 and the server computing device 415 can be communicatively coupled to one or more storage devices 430 over a network 460. The storage device(s) 430 can be a combination of volatile and non-volatile memory and can be at the same or different physical locations than the computing devices 412, 415. For example, the storage device(s) 430 can include any type of non-transitory computer-readable medium capable of storing information, such as a hard-drive, solid state drive, tape drive, optical storage, memory card, ROM, RAM, DVD, CD-ROM, write-capable, and read-only memories.

The server computing device 415 can include one or more processors 413 and memory 414. Memory 414 can store information accessible by the processor(s) 413, including instructions 421 that can be executed by the processor(s) 413. Memory 414 can also include data 423 that can be retrieved, manipulated, or stored by the processor(s) 413. Memory 414 can further include machine learning model 425. Machine learning model 425 may be trained to identify timer values for each DER based on various information such as underlying energy source, capacity, minimum, maximum, and average of voltages and frequencies, etc.

Memory 414 can be a type of non-transitory computer-readable medium capable of storing information accessible by the processor(s) 413, such as volatile and non-volatile memory. The processor(s) 413 can include one or more central processing units (CPUs), graphic processing units (GPUs), field-programmable gate arrays (FPGAs), and/or application-specific integrated circuits (ASICs), such as tensor processing units (TPUs).

Instructions 421 can include one or more instructions that when executed by the processor(s) 413, cause the one or more processors to perform actions defined by the instructions. Instructions 421 can be stored in object code format for direct processing by the processor(s) 413, or in other formats including interpretable scripts or collections of independent source code modules that are interpreted on demand or compiled in advance. Instructions 421 can include instructions for implementing processes consistent with aspects of this disclosure. Such processes can be executed using the processor(s) 413, and/or using other processors remotely located from the server computing device 415.

Data 423 can be retrieved, stored, or modified by the processor(s) 413 in accordance with instructions 421. Data 423 can be stored in computer registers, in a relational or non-relational database as a table having a plurality of different fields and records, or as JSON, YAML, proto, or XML documents. Data 423 can also be formatted in a computer-readable format such as, but not limited to, binary values, ASCII, or Unicode. Moreover, data 423 can include information sufficient to identify relevant information, such as numbers, descriptive text, proprietary codes, pointers, references to data stored in other memories, including other network locations, or information that is used by a function to calculate relevant data.

User computing device 412 can also be configured similar to the server computing device 415, with one or more processors 416, memory 417, instructions 418, and data 419. The user computing device 412 can also include a user output 426, and a user input 424. The user input 424 can include any appropriate mechanism or technique for receiving input from a user, such as a keyboard, mouse, mechanical actuators, soft actuators, touchscreens, microphones, and sensors.

Server computing device 415 can be configured to transmit data to the user computing device 412, and the user computing device 412 can be configured to display at least a portion of the received data on a display implemented as part of the user output 426. The user output 426 can also be used for displaying an interface between the user computing device 412 and the server computing device 415. The user output 426 can alternatively or additionally include one or more speakers, transducers, or other audio outputs, a haptic interface, or other tactile feedback that provides non-visual and non-audible information to the platform user of the user computing device 412.

Although FIG. 4 illustrates the processors 413, 416 and the memories 414, 417 as being within the computing devices 415, 412, components described in this specification, including the processors 413, 416 and the memories 414, 417 can include multiple processors and memories that can operate in different physical locations and not within the same computing device. For example, some of the instructions 421, 418 and the data 423, 419 can be stored on a removable SD card and others within a read-only computer chip. Some or all of the instructions and data can be stored in a location physically remote from, yet still accessible by, the processors 413, 416. Similarly, processors 413, 416 can include a collection of processors that can perform concurrent and/or sequential operations. Computing devices 415, 412 can each include one or more internal clocks providing timing information, which can be used for time measurement for operations and programs run by computing devices 415, 412.

The server computing device 415 can be configured to receive requests to process data from the user computing device 412. For example, environment 400 can be part of a computing platform configured to provide a variety of services to users, through various user interfaces and/or APIs exposing the platform services.

Devices 412, 415 can be capable of direct and indirect communication over network 460. Devices 412, 415 can set up listening sockets that may accept an initiating connection for sending and receiving information. The network 460 itself can include various configurations and protocols including the Internet, World Wide Web, intranets, virtual private networks, wide area networks, local networks, and private networks using communication protocols proprietary to one or more companies. Network 460 can support a variety of short- and long-range connections. The network 460, in addition, or alternatively, can also support wired connections between devices 412, 415, including over various types of Ethernet connection.

Although a single server computing device 415 and user computing device 412 are shown in FIG. 4, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

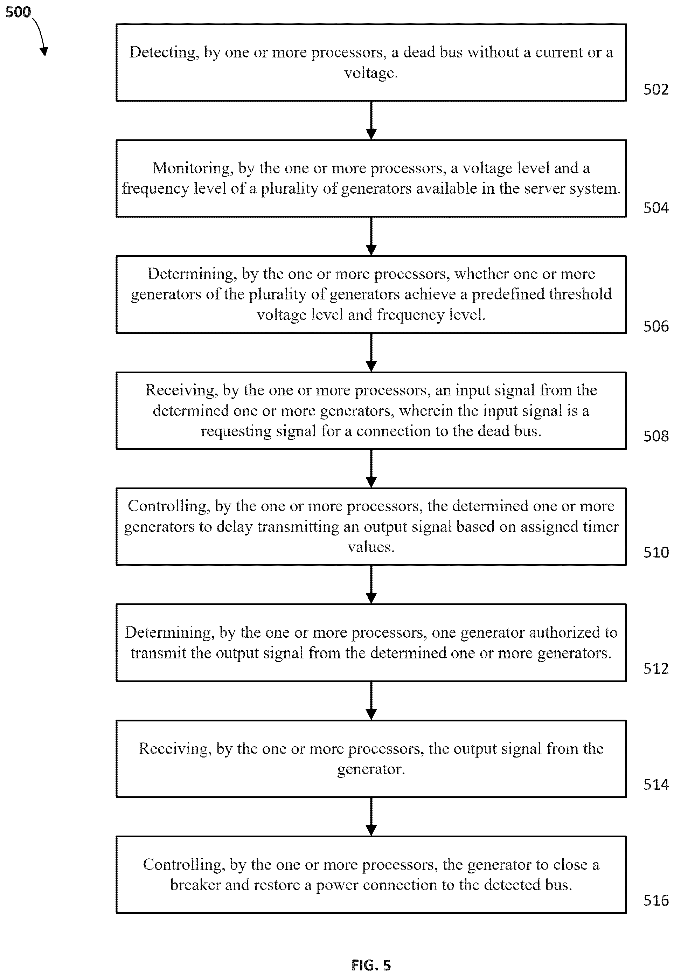

FIG. 5 illustrates an example flow diagram of the dead bus arbitration process. According to block 502, the system may be configured to detect a dead bus without a current or a voltage. The system may be configured to use an IED connected to both a power supply and one or more DERs. The system may also be configured to monitor the power transmitted to the DERPB. If the system detects one or more circuit breakers are triggered to open due to a power outage or any other issues preventing power from being transmitted from the power supply, the system may be configured to determine that the DERPB no longer has the power.

According to block 504, the system may be configured to monitor the voltage level and frequency level of a plurality of generators available in the server system. The system may use the telemetry connected to each DER and monitor the DER's voltage and frequency level. Since DERPB is connected to one or more loads, the system may be configured to identify a DER that can be compatible with the power level/characteristics of the power that the loads require.

According to block 506, the system may be configured to determine whether one or more generators of the plurality of generators reach a predefined threshold voltage level and frequency level. The system may be configured to monitor the voltage and frequency levels of each DER and determine that more than one DERs have reached the predefined voltage and frequency levels.

According to block 508, the system may be configured to receive an input signal from the determined one or more generators, wherein the input signal is a requesting signal for a connection to the dead bus. When there are more than one DERs that have reached the predefined voltage and frequency levels, the system may be configured to determine the timer values assigned to each DER.

According to block 510, the system may be configured to control the determined one or more generators to delay transmitting an output signal based on assigned timer values. The system may be configured to wait for the duration of time corresponding to each DER's assigned timer value when there are multiple DERs attempting to transmit power to the DERPB.

According to block 512, the system may be configured to determine one generator authorized to transmit the output signal from the determined one or more generators. The system may be configured to select a DER with the smallest timer value to trigger an issuance of the output signal.

According to block 514, the system may be configured to receive the output signal from the generator. The system may be configured to receive the output signal from the DER with the lower timer value. Once the system determines that the output signal is transmitted to the DER that also transmitted the input signal in the previous step, the system may be configured to transmit a circuit breaker closing signal.

According to block 516, the system may be configured to control the generator to close a breaker and restore a power connection to the detected bus. Each DER is connected to the DERPB via a circuit breaker. When the circuit breaker connected to the DER with the smallest timer value receives the circuit breaker closing signal, the power stored in the DER may be transmitted to the loads through the DERPB.

The dead bus arbitration system described herein is beneficial at least in that it provides for permissive signals circulated among the DERs that meet the specific requirement of frequency and voltage to energize a dead but regardless of the DER's manufacturer information, or proprietary communication protocol. The system provides a universal connectivity between the DERS and the dead bus. The DER with the smallest timer value may be selected without using the property communication protocol, thereby enabling more effective, efficient, and fast recovery from the power outage.

In this specification, the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the spirit and scope of the present technology as defined by the appended claims.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A dead bus arbitration system for a server system, the dead bus arbitration system comprising:
memory; and
one or more processors configured to:
detect a dead bus without a current or a voltage;
monitor a voltage level and a frequency level of a plurality of generators available in the server system;
determine whether two or more generators of the plurality of generators achieve a predefined threshold voltage level and frequency level;
receive respective first request signals from the determined two or more generators, wherein each first request signal requests a connection to the detected dead bus;
select one generator from the determined two or more generators based on assigned timer values;
control the selected generator to transmit a second request signal ;
close a breaker connected to the selected generator; and
transmit power from the selected generator to the detected dead bus.

2. The system of claim 1, wherein the plurality of generators are distributed energy resources; and
optionally wherein the distributed energy resources comprise one or more of solar photovoltaic generating units, wind generating units, or battery storage.

3. The system of claim 1 or claim 2, wherein the dead bus is a distributed energy resources paralleling bus.

4. The system of any one of claims 1 to 3, wherein the one or more processors are configured to randomly assign the timer values to each of the plurality of generators.

5. The system of claim 4, wherein the one or more processors are configured to use a machine learning model trained with data related to each generator's times taken to reach the predefined threshold voltage level and frequency level and assign the timer values to each of the plurality of generators using the trained machine learning model.

6. The system of any one of claims 1 to 5, wherein the one or more processors are further configured to select one generator from the determined two or more generators when the generator reaches the predefined threshold voltage level and frequency level faster than remaining generators.

7. The system of any one of claims 1 to 6, wherein the plurality of generators are configured to communicate wirelessly with one another.

8. The system of any one of claims 1 to 7, wherein one or more generators that were not authorized to transmit the second request signal are connected to energize a different bus; and
optionally wherein the one or more generators that were not authorized to transmit the second request signal are connected to a generator parallel switch (GPS) bus.

9. A method for arbitrating a dead bus for a server system, the method comprising:
detecting, by one or more processors, a dead bus without a current or a voltage;
monitoring, by the one or more processors, a voltage level and a frequency level of a plurality of generators available in the server system;
determining, by the one or more processors, whether two or more generators of the plurality of generators achieve a predefined threshold voltage level and frequency level;
receiving, by the one or more processors, respective first request signals from the determined two or more generators, wherein each first request signal requests a connection to the detected dead bus;
selecting, by the one or more processors, one generator from the determined two or more generators based on assigned timer values;
controlling , by the one or more processors, the selected generator to transmit a second request;
closing, by the one or more processors, a breaker connected to the selected generator; and
transmitting, by the one or more processors, power from the selected generator to the detected dead bus.

10. The method of claim 9, wherein the plurality of generators are distributed energy resources; and
optionally wherein the distributed energy resources comprise one or more of solar photovoltaic generating units, wind generating units, or battery storage.

11. The method of claim 9 or claim 10, wherein the dead bus is a distributed energy resources paralleling bus.

12. The method of any one of claims 9 to 11, further comprising randomly assigning, by the one or more processors, the timer values to each of the plurality of generators.

13. The method of claim 12, further comprising using a machine learning model trained with data related to each generator's times taken to reach the predefined threshold voltage level and frequency level and assigning the timer values to each of the plurality of generators using the trained machine learning model.

14. The method of any one of claims 9 to 13, further comprising selecting, by the one or more processors, one generator from the determined two or more generators when the generator reaches the predefined threshold voltage level and frequency level faster than remaining generators; and/or
further comprising connecting the plurality of generators wirelessly for communication.

15. The method of any one of claims 9 to 14, further comprising connecting one or more generators that were not authorized to transmit the second request signal to energize a different bus; and
optionally further comprising connecting the one or more generators that were not authorized to transmit the second request signal to a generator parallel switch (GPS) bus.
